# EUROPÄISCHE PATENTSCHRIFT

(11) **EP 3 365 120 B1**
(45) Veröffentlichungstag und Bekanntmachung des Hinweises auf die Patenterteilung: **18.12.2019**
(21) Anmeldenummer: 16779123.5
(22) Anmeldetag: 11.10.2016
(51) Int. Cl.: B21B 37/00, B21B 38/00, G01B 11/28, G01B 11/04, G01B 11/24, G01V 8/10, B21B 37/68

(54) **VERFAHREN UND VERMESSUNGSSYSTEM ZUM VERMESSEN EINES BEWEGBAREN OBJEKTES**
METHOD AND MEASURING SYSTEM FOR MEASURING A MOVABLE OBJECT
PROCÉDÉ ET SYSTÈME DE MESURE POUR LA MESURE D'UN OBJET DÉPLAÇABLE

(30) Priorität: 19.10.2015 DE 102015220289
(43) Veröffentlichungstag der Anmeldung: 29.08.2018
(73) Patentinhaber: SMS Group GmbH, 40237 Düsseldorf (DE)
(72) Erfinder: MÜLLER, Torsten, 57223 Kreuztal (DE); HASCHKE, Thomas, 57319 Bad Berleburg (DE)
(74) Vertreter: Kross, Ulrich
(86) Internationale Anmeldenummer: PCT/EP2016/074371
(87) Internationale Veröffentlichungsnummer: WO 2017/067823

(56) Entgegenhaltungen:
- EP-A1- 0 298 588
- EP-A2- 0 250 768
- WO-A1-90/01141
- WO-A2-2004/074769
- DE-A1- 2 140 939
- DE-A1- 3 116 278
- DE-A1- 19 506 467
- DE-A1- 19 704 337
- US-A- 4 548 503
- US-A1- 2009 113 968
- Micro Epsilon: "optoCONTROL // Optische Präzisions-Mikrometer", , 22. Oktober 2014 (2014-10-22), Seiten 1-20, XP055327649, Heinkelstraße 2 . 73066 Uhingen / Germany Gefunden im Internet: URL:http://www.micro-epsilon.de/download/p roducts/cat--optoCONTROL-ODC--de.pdf [gefunden am 2016-12-09]
- Anonymous: "Spurstabil", , 1. November 2011 (2011-11-01), XP055327655, Gefunden im Internet: URL:http://www.micro-epsilon.de/press/publ ication/pub-de--2011-11--Spurstabil.pdf [gefunden am 2016-12-09]
- Anonymous: "Spaltsensoren: Spalten und Kanten auf der Spur", , 15. August 2011 (2011-08-15), XP055327653, Gefunden im Internet: URL:http://www.scope-online.de/automatisie rung-steuerungstechnik/automatisierung--st euerungstechnik---spaltsensoren.htm [gefunden am 2016-12-09]

## Beschreibung

Die Erfindung betrifft ein Verfahren und ein Vermessungssystem zum Vermessen eines bewegbaren Objektes, beispielsweise eine Seitenführung für Gießstränge in einer hüttentechnischen Gieß- oder Walzanlage. Darüber hinaus betrifft die Erfindung eine solche Gieß- oder Walzanlage.

Lasergestützte Verfahren und Systeme zur Vermessung von Objekten, beispielsweise Walzen oder Seitenführungen in hüttentechnischen Anlagen sind im Stand der Technik grundsätzlich bekannt, so zum Beispiel aus der US-Patentanmeldung US 2005/0057743 A1 oder der koreanischen Patentanmeldung KR 10 2004 0045566.

Die deutsche Offenlegungsschrift DE 10 2011 078 623 A1 offenbart ein Verfahren und eine Vorrichtung zur Bestimmung der Lage einer Walze in einem Walzwerk. Die dort offenbarte Vermessungsvorrichtung verwendet eine Lichtquelle zum Aussenden eines Lichtbündels in Form eines kollimierten Lichtstrahls. Ein solcher Lichtstrahl wird benötigt, um, wenn der Lichtstrahl auf einen Spiegel an der zu vermessenen Walze auftrifft, einen definierten Bereich des Spiegels so zu bestrahlen, dass ein definierter reflektierter Lichtstrahl auf eine Empfängereinrichtung eintreffen kann. Bei der Empfängereinrichtung handelt es sich um einen zweidimensionalen Empfänger, welcher ausgebildet ist, das empfangende Lichtbündel zweidimensional aufgelöst zu empfangen. Weiterhin ist eine Auswerteeinrichtung vorgesehen, welche das von der Empfängereinrichtung empfange Bild des Lichtbündels auswertet.

Der Artikel: Micro Epsilon: "optoCONTROL//Optische Präzisions-Mikrometer", 22. Oktober 2014 (2014-10-22), Seiten 1-20, XP055327649, beschreibt optische Präzisionsmikrometer und gibt insbesondere eine Übersicht gängiger Modelle an. Es wird auch ein System zur Kantenmessung beschrieben, bei dem aus einer Laserlichtquelle parallele Lichtstrahlen austreten, die dann auf einer CCD-Zeile einer Empfangsoptik empfangen werden. Wird ein Messobjekt in den Strahl geführt, so wird der Lichtstrahl unterbrochen. Die daraus resultierende Abschattung wird von der Empfangsoptik erfasst und da der Abstand der Pixel der CCD-Zeile bekannt ist, kann die Größe und Position des Messobjektes ermittelt werden.

Im Zusammenhang mit dem in dem vorherigen Absatz diskutierten Artikel sei auf den Artikel: Anonymous: "Spaltensensoren: Spalten und Kanten auf der Spur", 15. August 2011 (2011-08-15), XP055327653, verwiesen. Dieser Artikel offenbart eine Anwendung der aus dem letzten Artikel bekannten Präzisions-Mikrometer für die Vermessung von Kanten bzw. Rändern von Metallbändern.

Die US 2009/113968 A1 beschreibt ein Verfahren, bei dem Walzgutränder optisch überwacht werden. Eine optische Messeinrichtung umfasst über oder unter der Walzstraße angeordnete Kameras. Abweichungen der Walzgutkanten bezüglich der Mitte der Walzstraße können detektiert werden.

Die europäische Patentanmeldung EP 2 842 648 A1 offenbart ein Verfahren, bei dem der Bahnverlauf einer Stahlplatte über Seitenführungen gesteuert wird und dieser Bahnverlauf optisch von einer über der Walzstraße angeordneten Kamera überwacht wird.

Die deutsche Patentanmeldung DE 21 40 939 A1 offenbart ein Verfahren zur optischen Bestimmung des Durchmessers bzw. der Höhe oder der Breite eines langgestreckten Körpers. Ein solcher Körper kann z. B. ein Walzgut sein, das aus einer Fertigungseinrichtung kontinuierlich abgezogen und auf eine Trommel aufgewickelt wird. Die Vermessung des Körpers erfolgt dabei wie folgt: Er wird mittels einer Lichtquelle auf eine aus einer großen Anzahl von fotoelektrischen Bauelementen aufgebauten Matrix projiziert, wobei durch den Körper ein Teil der parallelen Lichtstrahlen abgefangen wird. Aus der Anzahl der belichteten und nicht-belichteten Fotoelemente kann auf die Dimensionen des Körpers rückgeschlossen werden. Dadurch wird implizit ein bekannter Abstand zwischen den Detektorelementen und somit eine bekannte Auflösung vorausgesetzt. Die Messergebnisse werden dabei entweder über ein Anzeigegerät zur Anzeige gebracht oder als Stellgröße zum Betrieb eines Reglers verwendet, der in eine Fertigungsmaschine eingreift, um eventuelle Abweichungen von einem Soll-Wert auszuregeln.

Der Erfindung liegt die Aufgabe zugrunde, ein solches bekanntes Verfahren und ein solches bekanntes Vermessungssystem zum Vermessen eines bewegbaren Objektes auf Seitenführungen an einem Rollgang in einer Gieß- oder Walzanlage anzuwenden und gewünschte Informationen aus dem genierten Abbild abzuleiten.

Diese Aufgabe wird verfahrenstechnisch durch das in Patentanspruch 1 beanspruchte Verfahren und durch das in Patentanspruch 11 beanspruchte Vermessungssystem gelöst.

Bei der erfindungsgemäßen Lichtquelle handelt es sich vorzugsweise um eine Laserlichtquelle, weil eine solche Laserlichtquelle bereits von sich aus die für die Erfindung wesentliche Eigenschaft des Aussendens von parallelen Lichtstrahlen mit sich bringt. Alternativ kann die erforderliche Parallelität der Lichtstrahlen auch mit Hilfe einer geeigneten Optik, insbesondere einer Sammellinse hergestellt werden.

Der Begriff "..durch das Objekt beeinflusste Lichtstrahlen" meint, dass die von der Lichtquelle ausgesendeten Lichtstrahlen durch das Objekt unterbrochen und von dem Objekt entweder absorbiert, abgelenkt oder auf die Empfangseinrichtung hin reflektiert werden. Die "... durch das Objekt nicht beeinflussten Lichtstrahlen" gehen, ohne Unterbrechung durch das Objekt, eventuell nach einer Reflektion durch eine andere Einrichtung als das Objekt, von der Lichtquelle zu der Empfangseinrichtung.

Bei den Sensoren des Sensorfeldes, welche den ausgesendeten, aber von dem Objekt beeinflussten Lichtstrahlen zugeordnet sind, handelt es sich um jene Sensoren, die entweder keine der ausgesendeten Lichtstrahlen empfangen, weil die Lichtstrahlen durch das Objekt absorbiert oder von der Empfangseinrichtung weg abgelenkt wurden, oder welche jene der ausgesendeten Lichtstrahlen empfangen, die durch das Objekt reflektiert werden.

Die Auflösung des Sensorfeldes wird durch die bekannten Abstände der Sensoren des Sensorfeldes repräsentiert.

Das erfindungsgemäße Verfahren bietet den Vorteil, dass sich alle gewünschten Informationen zur Vermessung des Objektes in einfacher Weise durch Auswerten des Abbildes ermitteln lassen. Die Auswertung des Abbildes kann vorzugsweise voll- oder halbautomatisch erfolgen, was die Anwendung des Verfahrens für eine Bedienperson vorteilhafterweise deutlich vereinfacht und auch die benötigte Zeit zur Ermittlung der gewünschten Informationen deutlich verkürzt.

Gemäß einem ersten Ausführungsbeispiel müssen die Abstände der Positionen der Sensoren auf dem Sensorfeld keineswegs gleich sein. Wichtig ist nur, dass die Abstände überhaupt grundsätzlich bekannt sind, denn die Kenntnis dieser Abstände ist erforderlich für die weiter unten beschriebene Berechnung diverser Informationen.

Das Abbild mit den Positionen der Sensoren des Sensorfeldes kann auf einer Anzeigeeinrichtung für eine Bedienperson angezeigt werden.

Zur Ermittlung der Ist-Eindringtiefe des Objektes in den von dem Lichtbündel der Lichtstrahlen aufgespannten Raumbereich wird das Abbild dergestalt ausgewertet, dass die bekannten Abstände aller Sensoren, welche ausgesendeten, aber von dem Objekt beeinflussten Lichtstrahlen zugeordnet sind, in dem Abbild in Richtung der Bewegung des Objektes aufsummiert werden.

Die so ermittelte Ist-Eindringtiefe kann dann mit einer vorgegebenen Soll-Eindringtiefe verglichen werden. Wenn die Ist-Eindringtiefe von der Soll-Eindringtiefe abweicht, kann, vorzugsweise automatisch, eine Korrektur der Endposition des Objektes erfolgen, bis die Ist- mit der Soll-Position übereinstimmt. Vorzugsweise kann auch eine Fehlermeldung generiert und auf der Anzeigeeinrichtung angezeigt werden, wenn die Ist- von der Soll-Eindringtiefe abweicht.

Gemäß einer weiteren vorteilhaften Ausgestaltung des Verfahrens kann die Ist-Eindringtiefe für unterschiedliche Bereiche des Objektes durch Auswerten des Abbildes des Sensorfeldes individuell ermittelt werden. Diese individuellen Ist-Eindringtiefen können dann mit zugeordneten individuellen Soll-Eindringtiefen für die unterschiedlichen Bereiche des Objektes verglichen werden. Wenn dann für einzelne Bereiche des Objektes die individuelle Ist-Eindringtiefe mit der individuellen Soll-Eindringtiefe übereinstimmt, während dies für andere Bereiche des Objektes nicht zutrifft, dann kann aus diesem Sachverhalt auf einen partiellen Verschleiß der anderen Bereiche des Objektes zurückgeschlossen werden. Die Stärke des Verschleißes wird dann durch die Größe der Differenz zwischen der individuellen Ist-Eindringtiefe und der individuellen Soll-Eindringtiefe der anderen Bereiche des Objektes repräsentiert.

Die ermittelte Differenz zwischen der Soll-Eindringtiefe und der Ist-Eindringtiefe bezogen auf das gesamte Objekt oder die Stärke des Verschleißes der anderen Bereiche des Objektes kann als Offset-Wert gespeichert werden. Bei zukünftigen Positionierungen des Objektes kann dann der Offset-Wert automatisch berücksichtigt und so das Objekt sofort exakt positioniert werden.

Neben der Möglichkeit zur Berechnung der Eindringtiefe des Objektes in den von den Lichtstrahlen aufgespannten Raumbereich bietet die erfindungsgemäße Auswertung des Abbildes auch die Möglichkeit, die Geschwindigkeit zu ermitteln, mit welcher das Objekt in den von dem Lichtbündel aufgespannten Raumbereich eindringt. Dies erfolgt erfindungsgemäß durch folgende Schritte: Messen der Weglänge, die das Objekt bei seinem Eintritt in den Raumbereich zurücklegt durch Aufsummieren der bekannten Abstände aller Positionen der Sensoren des Sensorfeldes in dem Abbild, welche den ausgesendeten, aber von dem eingefahrenen Objekt beeinflussten Lichtstrahlen zugeordnet sind, in Richtung der Bewegung des Objektes während eines bestimmten Zeitintervalls, und Ermitteln der Geschwindigkeit durch Division der Weglänge durch das Zeitintervall.

Weiterhin bietet die Auswertung des Abbildes auch die Möglichkeit, die Kontur des Objektes zu ermitteln gemäß Anspruch 9.

Das erfindungsgemäße Verfahren kann vorsehen, dass die von der Lichtquelle ausgesendeten Lichtstrahlen, soweit sie nicht von dem Objekt unterbrochen werden, mit Hilfe eines Reflektors umgelenkt werden, bevor sie auf die Empfangseinrichtung treffen.

Bei dem Objekt kann es sich beispielsweise um eine Seitenführung an einem Transportweg, beispielsweise an einem Rollgang für eine Bramme handeln. Die Lichtquelle ist dann derart zu installieren, dass die Lichtstrahlen senkrecht zu der Bewegungsrichtung der Seitenführung verlaufen, und dass die Seitenführung bei ihrer Bewegung in den von dem Lichtbündel der Lichtstrahlen aufgespaltenen Raumbereich einfährt.

Die Aufgabe der Erfindung wird weiterhin durch das Vermessungssystem nach Anspruch 14 sowie eine Gieß- oder Walzanlage nach Anspruch 20 mit dem erfindungsgemäßen Vermessungssystem gelöst. Die Vorteile dieses Vermessungssystems und der beanspruchten Gieß- oder Walzanlage entsprechen den oben unter Bezugnahme auf das beanspruchte Verfahren genannten Vorteilen. Weitere vorteilhafte Ausgestaltungen des Verfahrens und des Vermessungssystems sind Gegenstand der abhängigen Ansprüche.

Der Beschreibung sind sechs Figuren beigefügt, wobei
- Figur 1: ein Ausführungsbeispiel zur Anwendung des erfindungsgemäßen Verfahrens und des erfindungsgemäßen Vermessungssystems in einem Walzwerk;
- Figur 2: ein Abbild der Sensoren des Sensorfeldes ohne Einfluss des Objektes; ;
- Figur 3: ein Abbild der Sensoren des Sensorfeldes mit Einfluss des Objektes;
- Figur 4: Walzanlage mit erfindungsgemäßem Vermessungssystem, wobei die Lichtstrahlen mit Hilfe einer Reflektoreinrichtung auf die Empfangseinrichtung umgelenkt werden;
- Figur 5: ein alternatives Ausführungsbeispiel zur Anwendung des erfindungsgemäßen Verfahrens und des erfindungsgemäßen Vermessungssystems in einem Walzwerk; und
- Figur 6: ein weiteres alternatives Ausführungsbeispiel zur Anwendung des erfindungsgemäßen Verfahrens und des erfindungsgemäßen Vermessungssystems in einem Walzwerk
zeigt.

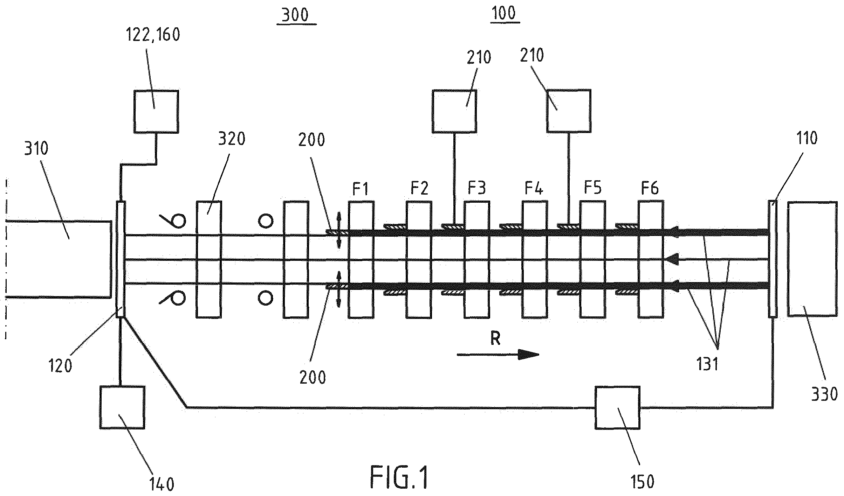

Die Erfindung wird nachfolgend unter Bezugnahme auf die genannten Figuren 1 bis 6 in Form von einem Ausführungsbeispiel detailliert beschrieben. In allen Figuren sind gleiche technische Elemente mit gleichen Bezugszeichen bezeichnet.

Figur 1 zeigt eine Walzanlage zum Walzen eines Gießstrangs bzw. eines geteilten Gießstrangs in Form einer Bramme (nicht gezeigt). Vor dem Walzen wird der Gießstrang zunächst in einem Ofen 310 auf die notwendige Walztemperatur erwärmt. Gegebenenfalls wird er dann mit Hilfe einer Schere 320 auf eine gewünschte Länge, die typischerweise im Hinblick auf eine spätere gewünschte Bundlänge gewählt wird, zugeschnitten. Der Gießstrang wird dann mit Hilfe der Fertiggerüste F1 - F6 zu einem Metallband gewünschter Dicke fertiggewalzt. Das Metallband wird schließlich auf einer Haspeleinrichtung 330 zu einem Bund aufgewickelt.

Gemäß Figur 1 ist das erfindungsgemäße Vermessungssystem 100 in die besagte Walzanlage 300 eingebaut. Konkret ist vor der Haspeleinrichtung 330 mindestens eine Lichtquelle 110 vorgesehen zum Aussenden von parallelen Lichtstrahlen entgegen der Transportrichtung R des Gießstrangs in Richtung hin zu einer Empfangseinrichtung 120. Bei der Lichtquelle kann es sich um eine einzelne Lichtquelle handeln, deren Strahl mit Hilfe optischer Hilfsmittel, z. B. Linsen zu einem Bündel vorzugsweise diskreter paralleler Lichtstrahlen aufgeweitet wird. Alternativ kann die Lichtquelle auch aus einer Vielzahl einzelner Lichtquellen bestehen, beispielsweise wird jeder einzelne Lichtstrahl durch eine individuelle Lichtquelle generiert. Vorzugsweise handelt es sich bei der Lichtquelle um eine Laserlichtquelle, die bereits von Hause aus parallele Lichtstrahlen aussendet.

Die Empfangseinrichtung 120 ist in Figur 1 beispielhaft hinter dem Ofen 310 angeordnet. Die Empfangseinrichtung 120 weist ein Sensorfeld mit einer Mehrzahl von Sensoren auf, wobei die Sensoren zum Empfangen von zumindest einem Teil der von der Lichtquelle ausgesendeten Lichtstrahlen dienen.

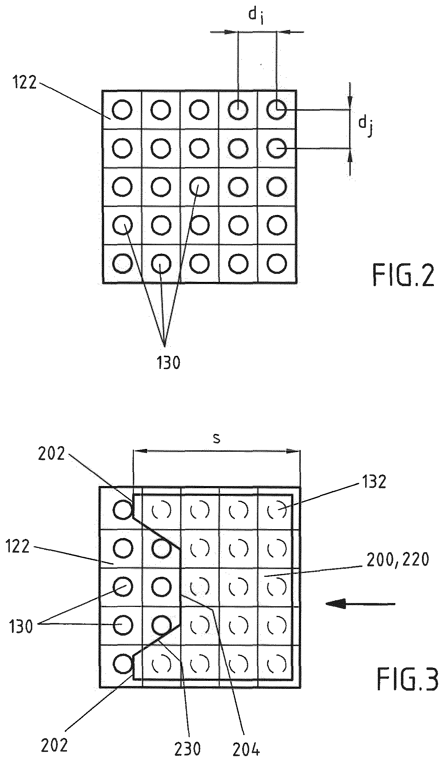

Die Figuren 2 und 3 zeigen Beispiele für Abbilder 122 solcher Sensorfelder. Die Abstände der einzelnen Sensoren 130 des Sensorfeldes sind beispielhaft mit dᵢ, dⱼ bezeichnet. Diese Abstände der Sensoren in dem Abbild können gleich groß sein, dies muss jedoch nicht der Fall sein. Wichtig ist vielmehr, dass die jeweiligen Abstände dᵢ, dⱼ bekannt sind.

Das Abbild 122 kann auf einer Anzeigeeinrichtung 160 für eine Bedienperson visualisiert werden.

Erfindungsgemäß ist der Empfangseinrichtung eine Auswerteeinrichtung 140 zugeordnet, um das Abbild 122 im Hinblick auf z. B. die Eindringtiefe s eines Objektes in den von dem Lichtbündel der Lichtstrahlen aufgespannten Raumbereich, die Geschwindigkeit und/oder die Kontur des Objektes zu ermitteln.

Die Übermittlung der Daten des Abbildes an die Anzeigeeinrichtung 160 kann per Kabel oder drahtlos erfolgen. Sämtliche elektronischen Einrichtungen des Vermessungssystems 100, insbesondere die Lichtquelle 110, die Empfangseinrichtung 120 und die Auswerteeinrichtung 140 können mit Hilfe einer dem Vermessungssystem eigenen elektrischen Energiequelle, z. B. einer Batterie oder einem Akkumulator mit elektrischer Energie versorgt werden.

Die in den Figuren 2 und 3 gezeigten Abbilder sind zweidimensional ausgebildet. Grundsätzlich können Sie auch lediglich eindimensional ausgebildet sein, wobei dann lediglich eine beispielsweise horizontale oder vertikale Linie von punktförmigen Sensoren vorgesehen ist.

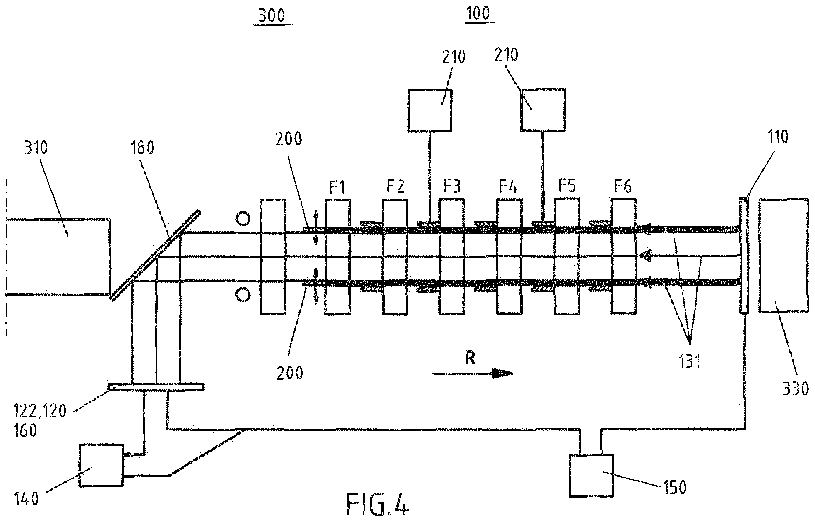

In Figur 1 werden die von der Lichtquelle 110 ausgesendeten Lichtstrahlen 130 direkt auf die Empfangseinrichtung 120 ausgestrahlt und von dieser empfangen. Alternativ besteht auch die Möglichkeit, die Lichtstrahlen zunächst auf eine Reflektoreinrichtung 180 hin auszustrahlen, welche in Ausbreitungsrichtung des Lichtes hinter dem zu vermessenden Objekt 200 angeordnet ist, zum Umlenken der Lichtstrahlen auf die Empfangseinrichtung 120; siehe Figur 4.

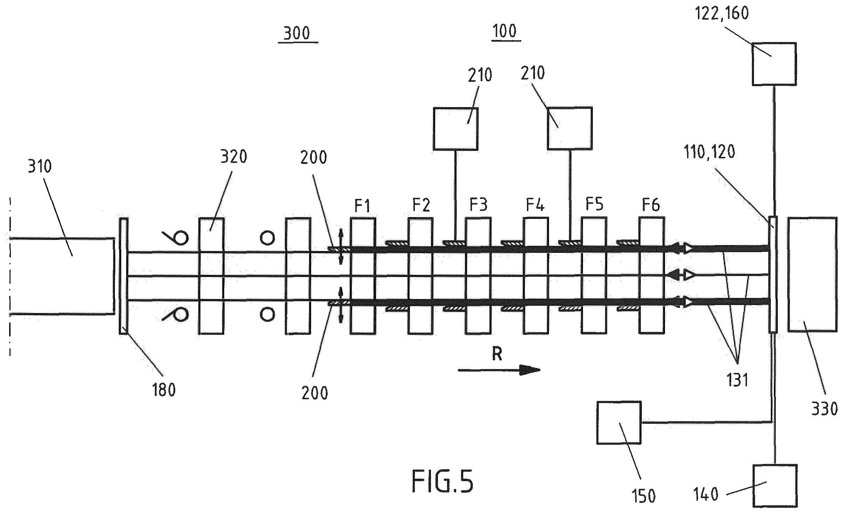

Fig. 5 zeigt eine weitere alternative Ausgestaltung des Vermessungssystems zum Einbau in die Walzanlage. Konkret bilden hier die Lichtquelle 110 und die Empfangseinrichtung 120 vorzugsweise eine bauliche Einheit; insbesondere sind sie quasi am selben Ort, hier beispielhaft - in Transportrichtung R der Bramme gesehen - vor der Haspeleinrichtung, positioniert. Am anderen Ende des von dem Vermessungssystem zu überwachenden Bereiches, hier hinter dem Ofen 310, ist die Reflektoreinrichtung 180 angeordnet, zum Reflektieren der von der Lichtquelle 110 ausgesendeten Lichtstrahlen auf die Empfangseinrichtung 120 zurück, soweit die Lichtstrahlen nicht durch das Objekt, beispielsweise die Seitenführung unterbrochen werden. Darüber hinaus dient die Empfangseinrichtung 120 auch zum Empfangen der gegebenenfalls von der Seitenführung reflektierten Lichtstrahlen, wie weiter unten beschrieben. Auch bei diesem Ausführungsbeispiel sind der Empfangseinrichtung 120 die Anzeigeeinrichtung 160 für das Abbild 122 des Sensorfeldes, die Auswerteeinrichtung 140 und die Energiequelle 150 zugeordnet.

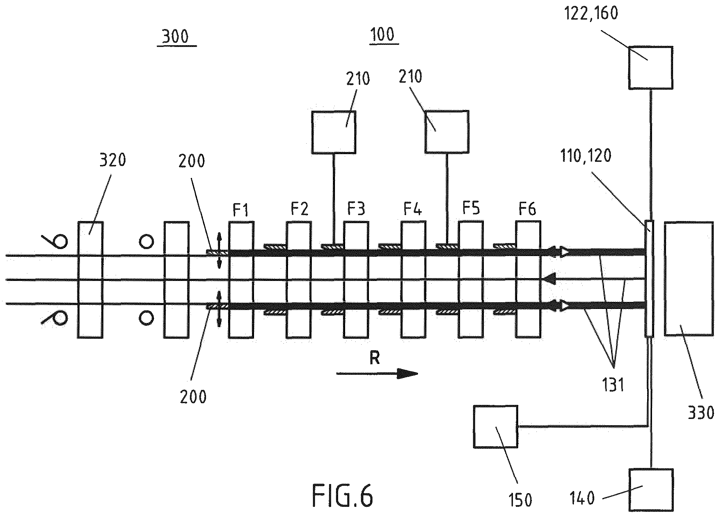

Fig. 6 zeigt eine weitere alternative Ausgestaltung des Vermessungssystems zum Einbau in die Walzanlage. Die Ausgestaltung nach Fig. 6 unterscheidet sich von der Ausgestaltung nach Fig. 5 lediglich darin, dass die Reflektoreinrichtung 180 komplett entfällt. Dies hat zur Folge, dass die von der Lichtquelle 110 ausgesendeten Lichtstrahlen, welche nicht durch das zu vermessende Objekt 200 beeinflusst werden, nicht wieder auf die Empfangseinrichtung 120, die bei dem Ausführungsbeispiel gemäß Fig. 6 am selben Ort wie die Lichtquelle 110 angenommen wird, zurückreflektiert und von dieser empfangen werden. Somit empfängt die Empfangseinrichtung 120 bzw. das Sensorfeld lediglich den Teil der von der Lichtquelle 110 ausgesendeten Lichtstrahlen, die von dem Objekt 200 beeinflusst bzw. reflektiert werden. Ansonsten gelten die für das Ausführungsbeispiel gemäß Fig. 5 gemachten Aussagen für das Ausführungsbeispiel nach Fig. 6 analog.

Das beschriebene Vermessungssystem 100 wird vor seiner Verwendung in die Gieß-oder Walzanlage eingebaut und dort kalibriert. Die Kalibrierung bedeutet in diesem Zusammenhang zunächst die Feinjustierung bzw. Feinpositionierung der Lichtquelle, der Empfangseinrichtung sowie gegebenenfalls der Reflektoreinrichtung mit Hilfe von zugeordneten Stellelementen so, dass sie optimal zueinander ausgerichtet sind und zusammenwirken können.

Nach dem Einbau des Vermessungssystems 100 in die Anlage 300 und nach der Kalibrierung des Vermessungssystems ist dieses bereit zur Durchführung des erfindungsgemäßen Verfahrens zum Vermessen eines bewegbaren Objektes, gemäß Figur 1 beispielhaft einer bewegbaren Seitenführung 200 am Rande eines Transportweges für einen Gießstrang. Das Verfahren sieht dann folgende Schrittabfolge vor:
Es wird die Lichtquelle 110 aktiviert zum Aussenden paralleler Lichtstrahlen 130. Die Seitenführung 200 wird dann quer zur Ausbreitungsrichtung der Lichtstrahlen 130 in den von den Lichtstrahlen aufgespannten Raumbereich eingefahren (Pfeilrichtung in Figur 3), so dass zumindest einzelne der ausgesendeten Lichtstrahlen auf ihrem Weg zu der Empfangseinrichtung 120 durch die Seitenführung 200 unterbrochen werden. Je nach Gestaltung der Oberfläche der Seitenführung werden die dort auftreffenden Lichtstrahlen absorbiert oder von der Empfangseinrichtung weg abgelenkt. Die Empfangseinrichtung empfängt dann die von der Seitenführung beeinflussten Lichtstrahlen nicht; dieser Fall ist in Fig. 1 dargestellt. Alternativ können die Lichtstrahlen, bei geeigneter Oberfläche der Seitenführung, auch von dieser zu der Empfangseinrichtung reflektiert und von der Empfangseinrichtung empfangen werden; dieser Fall ist in Fig. 5 dargestellt.

In beiden Fällen generiert die Empfangseinrichtung 120 das Abbild 122 zum einen mit den Positionen der Sensoren des Sensorfeldes, welche die ausgesendeten und nicht von der Seitenführung beeinflussten Lichtstrahlen empfangen. Diese sind in Figur 3 durch die Sensoren 130 angedeutet. Zum anderen werden in dem Abbild 122 auch die Positionen 132 der Sensoren des Sensorfeldes dargestellt, welche den ausgesendeten, aber durch das Objekt 200 bzw. die Seitenführungen beeinflussten Lichtstrahlen zugeordnet sind, dargestellt. Diese Sensoren an den Positionen 132 empfangen entweder keine der ausgesendeten Lichtstrahlen, weil die Lichtstrahlen beispielsweise von der Oberfläche der Seitenführung absorbiert oder von der Empfangseinrichtung weg abgelenkt wurden, oder sie empfangen die von der Seitenführung auf die Empfangseinrichtung hin reflektierten Lichtstrahlen. Die Positionen 130 der Sensoren, welche die Lichtstrahlen ohne Störung durch die Seitenführung empfangen, und die Positionen der Sensoren, welche die ausgesendeten Lichtstrahlen entweder nicht oder nach Reflektion an der Seitenführung empfangen, werden in dem Abbild 122 anschaulich unterschieden, wie in Fig. 3 gezeigt. Alternativ oder zusätzlich zu den einzelnen Positionen der Sensoren kann auch (nur) der Schatten 220 oder der Umriss der Seitenführungen in dem Abbild dargestellt sein, wie dies in Figur 3 ebenfalls gezeigt ist. Der Umriss der Seitenführung wird repräsentiert durch den Grenzverlauf zwischen den beiden Positionen 130 und 132.

Das so generierte Abbild 122 wird nachfolgend von der erfindungsgemäßen Auswerteeinrichtung 140 im Hinblick auf verschiedene Aspekte ausgewertet.

Zum einen ist die Auswerteeinrichtung 140 ausgebildet, das Abbild im Hinblick auf die Ist-Eindringtiefe s des Objektes 200 bzw. der Seitenführungen in den von dem Lichtbündel der Lichtstrahlen aufgespannten Raumbereich zu ermitteln. Die Ermittlung erfolgt konkret durch Aufsummierung der bekannten Abstände dᵢ, dⱼ aller ausgesendeten, aber nicht empfangenen Lichtstrahlen in Richtung der Bewegung der Seitenführungen in dem Abbild. Diese Bewegungsrichtung ist in Figur 3 durch den dort gezeigten Pfeil nach links angedeutet. Die Genauigkeit bzw. die Auflösung, mit welcher die Eindringtiefe s ermittelt werden kann, hängt ab von der Dichte bzw. der Abstände der Sensoren in dem Sensorfeld bzw. in dem Abbild 122. In den Figuren 2 und 3 ist die Dichte der Sensoren recht gering gehalten, um die Anschaulichkeit nicht zu beeinträchtigen; in der Praxis ist es möglich, die Abstände dᵢ, dⱼ sehr gering, beispielsweise im Mykro- oder Millimeterbereich zu wählen, und dementsprechend genau bzw. hochauflösend kann die gesuchte Eindringtiefe s berechnet werden.

Bei der durch Auswerten des Abbildes 122 ermittelten Eindringtiefe s handelt es sich um die sogenannte Ist-Eindringtiefe s. Das erfindungsgemäße Verfahren kann vorsehen, dass diese Ist-Eindringtiefe mit einer vorgegebenen Soll-Eindringtiefe verglichen wird, wobei diese Soll-Eindringtiefe eine Soll-Position für das Objekt 200 bzw. die Seitenführung beispielsweise in einer Gieß- oder Walzanlage repräsentiert. Eine festgestellte Abweichung der Ist- von der Soll-Eindringtiefe bedeutet in der Regel, dass die Soll-Position nicht korrekt angefahren wird, und dementsprechend ist ein Aktuator 210, der zur Positionierung der Seitenführungen 200 verwendet wird, neu zu positionieren bzw. zu kalibrieren. Im Rahmen der Kalibrierung, die vorzugsweise auch automatisch erfolgen kann, wird der Aktuator 210 derart eingestellt, dass das Objekt wieder seine vorgegebene Soll-Position erreicht, d. h. die Justierung des Aktuators erfolgt soweit, bis die Ist- mit der Soll-Position übereinstimmt. Die anfänglich detektierte Abweichung der Ist- von der Soll-Eindringtiefe kann auch als Offset-Wert in einer Steuerung für den Aktuator hinterlegt werden, so dass sie auch für zukünftige Aktivierungen des Aktuators regelmäßig berücksichtigt werden kann. Der Offset-Wert kann auch zur Generierung einer Fehlermeldung dienen, die beispielsweise auf der Anzeigeeinrichtung 160 angezeigt werden kann.

Die Ermittlung der Ist-Eindringtiefe kann für unterschiedliche Bereiche 202, 204 des Objektes; siehe Fig. 3, individuell bzw. getrennt erfolgen, indem das Abbild 122 mit Hilfe der Auswerteeinrichtung 140 entsprechend ausgewertet wird. Konkret können für die unterschiedlichen Bereiche 202, 204 individuelle Ist-Eindringtiefen ermittelt und mit zugeordneten individuellen Soll-Eindringtiefen für die unterschiedlichen Bereiche verglichen werden. Wenn dann für einzelne Bereiche des Objektes, z. B. für den Bereich 202 in Figur 3 festgestellt wird, dass die individuelle Ist-Eindringtiefe mit der individuellen Soll-Eindringtiefe übereinstimmt, aber andererseits für den Bereich 204 gleichzeitig festgestellt wird, dass die für diesen Bereich individuell ermittelte Ist-Eindringtiefe nicht mit der zugeordneten individuellen Soll-Eindringtiefe übereinstimmt, so lässt dies auf einen partiellen Verschleiß des Bereiches 204 des Objektes rückschließen. Die Stärke des Verschleißes entspricht dann der Differenz zwischen der individuellen Ist-Eindringtiefe und der individuellen Soll-Eindringtiefe in diesem Bereich 204. Der Bereich 204 ist bei dem in Figur 3 gezeigten Ausführungsbeispiel, bei dem es sich bei dem Objekt 200 um die Seitenführung an dem Transportweg eines Gießstrangs handelt, typischerweise direkt mit dem Gießstrang in Kontakt; daraus resultiert der Verschleiß. Demgegenüber unterliegen die Bereiche 202 typischerweise keinem Verschleiß, weil diese nicht in Kontakt mit dem Gießstrang sind. Bei dem beschriebenen Beispiel wird dann der Aktuator 140 derart eingestellt, dass die Differenz zwischen der Ist-Eindringtiefe und der Soll-Eindringtiefe in dem Bereich 204 des Objektes 200 zu Null wird, weil, wie gesagt, dieser Bereich für die tatsächliche Führung des Gießstrangs relevant ist. Dagegen wird dann in diesem Fall eine Abweichung der Ist- von der Soll-Eindringtiefe für die Bereiche 202 der Seitenführung billigend in Kauf genommen, weil diese Abweichung für den beabsichtigten Zweck, nämlich die präzise Führung des Gießstrangs irrelevant ist.

Die Differenz zwischen der Soll-Eindringtiefe und der Ist-Eindringtiefe bezogen auf das gesamte Objekt oder die Stärke des Verschleißes eines bestimmten Teilbereiches des Objektes kann, wie beschrieben, durch Auswertung des Abbildes ermittelt werden. Die Differenz bzw. die Stärke des Verschleißes wird dann vorzugsweise als Offset-Wert in der den Aktuatoren zugeordneten Steuerung gespeichert, um bei vorzugsweise automatischen neuen Positionierungsvorgängen in Zukunft automatisch berücksichtigt werden zu können.

Ungeachtet der Möglichkeit zur Ermittlung der Ist-Eindringtiefe ermöglicht die Auswertung des Abbildes 122 durch die Auswerteeinrichtung 140 auch die Möglichkeit zur Ermittlung der Geschwindigkeit, mit welcher das Objekt bzw. die Seitenführung 200 in dem von den Lichtstrahlen aufgespannten Raumbereich eindringt. Dazu wird eine Weglänge, die das Objekt 200 bei seinem Eintritt in den Raumbereich zurücklegt, gemessen durch Aufsummieren der bekannten Abstände aller Sensoren in dem Sensorfeld in Richtung der Bewegung des Objektes während eines bestimmten Zeitintervalls ermittelt, die den von dem Objekt beeinflussten oder nicht beeinflussten Lichtstrahlten zugeordnet sind. Zur Ermittlung der Geschwindigkeit wird dann die gemessene Weglänge durch das gemessene Zeitintervall dividiert. Bei der Weglänge kann es sich um die gesamte Eindringtiefe oder eine Teillänge davon handeln.

Weiterhin ermöglicht die Auswertung des Abbildes auch die Ermittlung der Kontur des Objektes, welches in den durch die Lichtstrahlen aufgespannten Raumbereich eindringt. Die Kontur 230 entspricht dem Grenzverlauf zwischen den Positionen 130 der Sensoren, welche die von dem Objekt nicht beeinflussten Lichtstrahlen empfangen, und den Positionen 132 der Sensoren, welche den von dem Objekt beeinflussten Lichtstrahlen zugeordnet sind, wie dies in Figur 3 ersichtlich ist.

### Bezugszeichenliste

- 100: Vermessungssystem
- 110: Lichtquelle
- 120: Empfangseinrichtung
- 122: Abbild des Sensorfeldes
- 130: Sensor
- 131: Lichtstrahl
- 132: Position von nicht empfangenem Lichtstrahl oder von empfangenen reflektierten Lichtstrahlen
- 140: Auswerteeinrichtung
- 150: Energiequelle
- 160: Anzeigeeinrichtung
- 180: Reflektoreinrichtung
- 200: bewegbares Objekt, beispielsweise Seitenführung
- 202: Bereich des unverschlissenen Objektes
- 204: Bereich des verschlissenen Objektes
- 210: Aktuator
- 220: Schatten/Umriss der Seitenführung
- 230: Kontur
- 300: Walzanlage
- 310: Ofen
- 320: Schere
- 330: Haspeleinrichtung

- dᵢ: Abstand
- dⱼ: Abstand
- s: Eindringtiefe
- R: Transportrichtung des Gießstrangs

## Patentansprüche

1. Verfahren zum Vermessen eines bewegbaren Objektes (200) aufweisend folgende Schritte:
- Aktivieren mindestens einer Lichtquelle (110) zum Aussenden von parallelen Lichtstrahlen (131), welche einen Raumbereich aufspannen;
- Einfahren des Objektes (200) mit zumindest einer Bewegungskomponente quer zu der Richtung der Lichtstrahlen in den von den Lichtstrahlen aufgespannten Raumbereich so, dass einzelne der ausgesendeten Lichtstrahlen auf ihrem Weg zu einer Empfangseinrichtung (120) durch das Objekt (200) beeinflusst werden;
- Empfangen der von dem Objekt beeinflussten und/oder nicht beeinflussten Lichtstrahlen mit Hilfe eines Sensorfeldes der Empfangseinrichtung (120), wobei die Auflösung des Sensorfeldes in mindestens einer Raumrichtung quer zur Richtung der Lichtstrahlen bekannt ist; und
- Generieren eines Abbildes (122) des Sensorfeldes mit den Positionen der Sensoren (130) des Sensorfeldes, welche den von dem Objekt nicht beeinflussten Lichtstrahlen zugeordneten, und mit den Positionen der Sensoren (130) des Sensorfeldes, welche den ausgesendeten, aber von dem eingefahrenen Objekt (200) beeinflussten Lichtstrahlen zugeordnet sind, wobei aufgrund der bekannten Auflösung des Sensorfeldes Abstände (dᵢ, dⱼ) zwischen den einzelnen Positionen der Sensoren (130) ebenfalls bekannt sind;
**dadurch gekennzeichnet,**
**dass** es sich bei dem Objekt (200) um eine Seitenführung an einem Transportweg für eine Bramme in einer Gieß- oder Walzanlage handelt;
**dass** die Lichtquelle (100) derart installiert wird, dass die Lichtstrahlen (131) senkrecht zu der Bewegungsrichtung der Seitenführung (200) verlaufen;
und **dass** das Abbild im Hinblick auf die Eindringtiefe (s) der Seitenführung (200) in den von den Lichtstrahlen aufgespannten Raumbereich ausgewertet wird.

2. Verfahren nach Anspruch 1,
**dadurch gekennzeichnet,**
**dass** die Abstände (dᵢ, dⱼ) der Sensoren untereinander gleich oder ungleich sind.

3. Verfahren nach einem der vorangegangenen Ansprüche,
**dadurch gekennzeichnet,**
**dass** das Abbild (122) auf einer Anzeigeeinrichtung (160) für eine Bedienperson angezeigt wird.

4. Verfahren nach einem der vorangegangenen Ansprüche,
**dadurch gekennzeichnet, dass**
die Auswertung des Abbildes (122) zur Ermittlung der Ist-Eindringtiefe (s) des Objektes (200) in den von dem Lichtbündel der Lichtstrahlen aufgespannten Raumbereich zumindest näherungsweise erfolgt durch Aufsummieren der bekannten Abstände aller Positionen der Sensoren (130) des Sensorfeldes, welche den ausgesendeten, aber von dem eingefahrenen Objekt (200) beeinflussten Lichtstrahlen zugeordnet sind, in Richtung der Bewegung des Objektes (200) in dem Abbild.

5. Verfahren nach Anspruch 4,
**dadurch gekennzeichnet,**
**dass** die ermittelte Ist-Eindringtiefe (s) mit einer vorgegebenen Soll-Eindringtiefe verglichen wird; und
**dass** - wenn die Ist-Eindringtiefe von der Soll-Eindringtiefe abweicht - eine vorzugsweise automatische Korrektur der Endposition des Objektes erfolgt bis die Ist- mit der Soll-Position übereinstimmt, und vorzugsweise auch eine Fehlermeldung generiert und auf der Anzeigeeinrichtung (160) angezeigt wird.

6. Verfahren nach Anspruch 4 oder 5,
**dadurch gekennzeichnet, dass**
die Ist-Eindringtiefen für unterschiedliche Bereiche des Objektes durch Auswerten des Abbildes individuell ermittelt und mit zugeordneten individuellen Soll-Eindringtiefen für die unterschiedlichen Bereiche des Objektes vergleichen werden; und
- wenn für einzelne Bereiche des Objektes die individuelle Ist-Eindringtiefe mit der individuellen Soll-Eindringtiefe übereinstimmt und für andere Bereiche des Objektes nicht - auf einen partiellen Verschleiß der anderen Bereiche des Objektes rückgeschlossen wird,
wobei die Stärke des Verschleißes durch die Größe der Differenz zwischen der individuellen Ist-Eindringtiefe und der individuellen Soll-Eindringtiefe der anderen Bereiche des Objektes repräsentiert wird.

7. Verfahren nach Anspruch 5 oder 6,
**dadurch gekennzeichnet, dass**
die Differenz zwischen der Soll-Eindringtiefe und der Ist-Eindringtiefe bezogen auf das gesamte Objekt oder die Stärke des Verschleißes der anderen Bereiche des Objektes ermittelt und als Offset-Wert gespeichert wird zur Berücksichtigung bei zukünftigen Positionierungen des Objektes (200).

8. Verfahren nach einem der vorangegangenen Ansprüche,
**gekennzeichnet durch**
Umlenken der von der Lichtquelle ausgesendeten Lichtstrahlen, soweit nicht von der Seitenführung unterbrochen, an die Empfangseinrichtung.

9. Verfahren nach Anspruch 1,
**dadurch gekennzeichnet,**
**dass** das Verfahren zur Vorbereitung der Vermessung des Objektes (200) folgende Schritte aufweist:
- Einsetzen der mindestens einen Lichtquelle (110) und der Empfangseinrichtung (120) mit dem Sensorfeld sowie gegebenenfalls einer Reflektoreinrichtung (180) in den Transportweg der Bramme;
- Ausrichten der mindestens einen Lichtquelle und des Sensorfeldes sowie gegebenenfalls auch der Reflektoreinrichtung derart, dass das Sensorfeld die Lichtstrahlen der Lichtquelle empfangen kann; und
- Anordnen des Sensorfeldes in fester Relativposition zu der Ausgangsposition des bewegbaren Objektes derart, dass das Objekt zumindest bei Erreichen seiner Endposition zumindest teilweise innerhalb des von den Lichtstrahlen aufgespannten Raumbereiches liegt.

10. Verfahren nach einem der Ansprüche 4 bis 9,
**dadurch gekennzeichnet,**
**dass** - wenn die ermittelte Ist-Eindringtiefe der Seitenführung (200) in den Transportweg geringer ist als die Soll-Eindringtiefe - eine Meldung generiert wird, welche vorzugsweise einen Hinweis auf eine zumindest teilweise Abnutzung der Seitenführung und - bei Erreichen einer definierten Grenze - vorzugsweise eine Empfehlung für einen Austausch der abgenutzten Seitenführung enthält, wenn zuvor eine Kalibrierung stattgefunden hatte.

11. Vermessungssystem (100) zur Durchführung des Verfahrens nach einem der vorangegangenen Ansprüche, aufweisend:
mindestens eine Lichtquelle (110) zum Aussenden von parallelen Lichtstrahlen, welche einen Raumbereich aufspannen;
eine Empfangseinrichtung (120) mit einem Sensorfeld zum Empfangen von zumindest einem Teil der ausgesendeten Lichtstrahlen, wobei die Auflösung des Sensorfeldes in mindestens einer Raumrichtung quer zur Richtung der Lichtstrahlen bekannt ist; und
eine Auswerteeinrichtung (140) zum Auswerten der von der Empfangseinrichtung (120) empfangenen Lichtstrahlen;
wobei die Empfangseinrichtung (120) ausgebildet ist zum Generieren eines Abbildes (122) des Sensorfeldes mit den Positionen der Sensoren des Sensorfeldes, welche den von dem Objekt nicht beeinflussten Lichtstrahlen (131) zugeordnet sind, und mit den Positionen der Sensoren des Sensorfeldes, welche den ausgesendeten, aber von dem eingefahrenen Objekt (200) beeinflussten Lichtstrahlen zugeordnet sind, wobei aufgrund der bekannten Auflösung des Sensorfeldes die Abstände (dᵢ, dⱼ) zwischen den einzelnen Positionen ebenfalls bekannt sind;
**dadurch gekennzeichnet,**
**dass** es sich bei dem Objekt (200) um eine Seitenführung an einem Transportweg für eine Bramme in einer Gieß- oder Walzanlage handelt;
**dass** die Lichtquelle (110) derart installiert wird, dass die Lichtstrahlen (131) senkrecht zu der Bewegungsrichtung der Seitenführung (200) verlaufen;
**dass** die Seitenführung bei ihre Bewegung in den von den Lichtstrahlen (131) aufgespannten Raumbereich eintritt; und
**dass** die Auswerteeinrichtung (140) ausgebildet ist, das Abbild (122) auszuwerten im Hinblick auf die Eindringtiefe (s) der Seitenführung in den von dem Lichtbündel der Lichtstrahlen aufgespannten Raumbereich.

12. Vermessungssystem (100) nach Anspruch 11,
**dadurch gekennzeichnet,**
**dass** die mindestens eine Lichtquelle (110) vorzugsweise als Laserlichtquelle ausgebildet ist zum Aussenden von einem Lichtbündel von parallelen Lichtstrahlen mit 1-dimensionalem oder 2-dimensionalem Querschnitt.

13. Vermessungssystem (100) nach Anspruch 11 oder 12,
**dadurch gekennzeichnet,**
**dass** das Vermessungssystem eine eigene elektrische Energiequelle (150), z.B. eine Batterie oder einen Akkumulator aufweist.

14. Vermessungssystem (100) nach einem der Ansprüche 11 bis 13,
**gekennzeichnet durch**
eine Anzeigeeinrichtung (160), welche mit der Empfangseinrichtung (120) und/oder der Auswerteeinrichtung (140) per Kabel oder per Funk zur Datenübertragung in Verbindung steht, insbesondere zur Anzeige des Abbildes (122).

15. Vermessungssystem (100) nach einem der Ansprüche 11 - 14,
**gekennzeichnet durch**
eine Reflektoreinrichtung (180), welche in Ausbreitungsrichtung der Lichtstrahlen (131) hinter der Seitenführung angeordnet ist zum Umlenken der nicht **durch** der Seitenführung beeinflussten Lichtstrahlen (131) auf das Sensorfeld der Empfangseinrichtung (120).

16. Vermessungssystem (100) nach einem der Ansprüche 11 bis 15,
**dadurch gekennzeichnet,**
**dass** die Lichtquelle (110), die Empfangseinrichtung (120) und ggf. die Reflektoreinrichtung vorzugsweise mit Hilfe von Stellelementen frei positionierbar, insbesondere feinjustierbar sind, zwecks optimaler Ausrichtung zueinander.

17. Gieß- oder Walzanlage zum Herstellen oder Bearbeiten eines Gießstranges, aufweisend einen Transportweg für den Gießstrang mit Seitenführungen am Rand des Transportweges zum Führen des Gießstrangs,
wobei die Seitenführungen mit Hilfe von Aktuatoren (210) quer zur Linie des Transportweges in diesen hinein und aus diesem heraus verfahrbar sind; **gekennzeichnet dadurch, dass** die Gieß-oder Walzanlage das Vermessungssystem nach einem der Ansprüche 11 - 16 aufweist, wobei es sich bei dem Objekt um die Seitenführungen handelt; und
wobei die Lichtquelle (110) und die Empfangseinrichtung (120) sowie gegebenenfalls die Reflektoreinrichtung so ausgerichtet sind, dass sich die ausgesendeten Lichtstrahlen (131) senkrecht zur Verfahrrichtung der Seitenführungen (200) ausbreiten und dass die Seitenführungen quer in den von den Lichtstrahlen aufgespannten Raumbereich hinein verfahrbar sind.

## Claims

1. Method of measuring a movable object (200), comprising the following steps:
- activating at least one light source (110) for emitting parallel light rays (131) covering a three-dimensional region;
- moving the object (200), by at least one movement component transverse to the direction of the light rays, into the three-dimensional region covered by the light rays so that individual ones of the emitted light rays are influenced by the object (200) on their path to a receiving device (120);
- receiving the light rays, which have been influenced and/or not influenced by the object, with the help of a sensor field of the receiving device (120), wherein the resolution of the sensor field in at least one spatial direction transverse to the direction of the light rays is known; and
- generating an image (122) of the sensor field by the positions of the sensors (130), which are associated with light rays not influenced by the object, of the sensor field and by the positions of the sensors (130), which are associated with the emitted light rays influenced by the moved-in object (200), of the sensor field, wherein spacings (dᵢ dⱼ) between the individual positions of the sensors (130) are similarly known by virtue of the known resolution of the sensor field;
**characterised in that**
the object (200) is a lateral guide at a transport path for a slab in a casting or rolling plant; the light source (100) is installed in such a way that the light rays (131) run perpendicularly to the direction of movement of the lateral guide (200); and
the image is evaluated with respect to the depth (s) of penetration of the lateral guide (200) into the three-dimensional region covered by the light rays.

2. Method according to claim 1, **characterised in that** the spacings (dᵢ, dⱼ) of the sensors amongst one another are equal or unequal.

3. Method according to one of the preceding claims, **characterised in that** the image (122) is displayed on a display device (160) for an operator.

4. Method according to any one of the preceding claims, **characterised in that** the evaluation of the image (122) for determination of the actual depth (s) of penetration of the object (200) into the three-dimensional region covered by the light beam of the light rays is carried out at least approximately by summation of the known spacings of all positions of the sensors (130), which are associated with the transmitted light rays influenced by the moved-in object (200), of the sensor field in the direction of movement of the object (200) in the image.

5. Method according to claim 4, **characterised in that** the determined actual depth (s) of penetration is compared with a predetermined target depth of penetration; and if the actual depth of penetration differs from the target depth of penetration a preferably automatic correction of the end position of the object is carried out until the actual position corresponds with the target position, and preferably a fault report is also generated and displayed on the display device (160).

6. Method according to claim 4 or 5, **characterised in that** the actual depths of penetration for different regions of the object are individually determined by evaluation of the object and are compared with associated individual target depths of penetration for the different regions of the object; and if the individual actual depth of penetration corresponds with the individual target depth of penetration for individual regions of the object and not for other regions of the object it is concluded that there is partial wear of the other regions of the object, wherein the extent of wear is represented by the amount of difference between the individual actual depth of penetration and the individual target depth of penetration of the other regions of the object.

7. Method according to claim 5 or 6, **characterised in that** the difference between the target depth of penetration and the actual depth of penetration referred to the overall object or the extent of wear of the other regions of the object is determined and is stored as an offset value for consideration in future positionings of the object (200).

8. Method according to any one of the preceding claims, **characterised by** deflection to the receiving device of those light rays which are emitted by the light source and not interrupted by the lateral guide.

9. Method according to claim 1, **characterised in that** the procedure for preparation for measurement of the object (200) comprises the following steps:
- setting the at least one light source (110) and the receiving device (120) with the sensor field as well as optionally a reflector device (180) in the transport path of the slab;
- orienting the at least one light source and the sensor field as well as optionally also the reflector device in such a way that the sensor field can receive the light rays of the light source; and
- arranging the sensor field in a fixed position relative to the initial position of the movable object in such a way that the object at least on reaching its end position lies at least partly within the three-dimensional region covered by the light rays.

10. Method according to any one of claims 4 to 9, **characterised in that** if the determined actual depth of penetration of the lateral guide (200) into the transport path is less than the target depth of penetration a report is generated which preferably contains a reference to at least partial wear of the lateral guide and if a defined limit is reached preferably contains a recommendation for exchange of the worn lateral guide if a calibration has been carried out previously.

11. Measuring system (100) for carrying out the method according to any one of the preceding claims, comprising:
at least one light source (110) for emitting parallel light rays covering a spatial region;
a receiving device (120) with a sensor field for reception of at least a part of the emitted light rays, wherein the resolution of the sensor field in at least one spatial direction transverse to the direction of the light rays is known; and
an evaluating device (140) for evaluating the light rays received by the receiving device (120);
wherein the receiving device (120) is configured for generating an image (122) of the sensor field by the positions of the sensors, which are associated with the light rays (131) not influenced by the object, of the sensor field and by the positions of the sensors, which are associated with the emitted light rays influenced by the moved-in object (200), of the sensor field and wherein by virtue of the known resolution of the sensor field the spacings (dᵢ, dⱼ) between the individual positions are similarly known;
**characterised in that**
the object (200) is a lateral guide at a transport path for a slab in a casting or rolling plant;
the light source (110) is installed in such a way that the light rays (131) run perpendicularly to the movement direction of the lateral guide (200);
the lateral guide during its movement enters the three-dimensional region covered by the light rays (131); and
the evaluating device (140) is configured to evaluate the image (122) with respect to the depth (s) of penetration of the lateral guide into the three-dimensional region covered by the light beam of the light rays.

12. Measuring system (100) according to claim 11, **characterised in that** the at least one light source (11) is preferably constructed as a laser light source for emitting a light beam of parallel light rays with a one-dimensional or two-dimensional cross-section.

13. Measuring system (100) according to claim 11 or 12, **characterised in that** the measuring system comprises an individual electrical energy source (150), for example a battery or an accumulator.

14. Measuring System (100) according to any one of claims 11 to 13, **characterised by** a display device (160) connected with the receiving device (120) and/or the evaluating device (140) by cable or radio for data transmission, particularly for display of the image (122).

15. Measuring system (100) according to any one of claims 11 to 14, **characterised by** a reflector device (180), which is arranged behind the lateral guide in the direction of propagation of the light rays (131), for deflection of the light rays (131), which are not influenced by the lateral guide, to the sensor field of the receiving device (120).

16. Measuring system (100) according to any one of claims 11 to 15, **characterised in that** the light source (110), the receiving device (120) and optionally the reflector device are freely positionable, particularly finely adjustable, preferably with the help of setting elements, for the purpose of optimum orientation relative to one another.

17. Casting and rolling plant for producing or processing a cast strip, comprising a transport path for the cast strip with lateral guides at the edge of the transport path for guidance of the cast strip, wherein the lateral guides are movable with the help of actuators (210) transversely to the line of the transport path into and out of this;
**characterised in that** the casting or rolling plant comprises the measuring system according to any one of claims 11 to 16,
wherein the object is the lateral guides; and
wherein the light source (110) and the receiving device (120) as well as optionally the reflector device are so oriented that the emitted light beams (131) propagate perpendicularly to the movement direction of the lateral guides (200), and that the lateral guides are movable transversely into the three-dimensional region covered by the light rays.

## Revendications

1. Procédé pour la mesure d'un objet en mouvement (200) présentant les étapes suivantes consistant à :
- activer au moins une source de lumière (110) dans le but d'émettre des rayons de lumière parallèles (131) qui fixent une étendue spatiale ;
- introduire l'objet (200) possédant au moins une composante de mouvement en direction transversale par rapport à la direction des rayons de lumière dans l'étendue spatiale fixée par les rayons de lumière, d'une manière telle que des rayons individuels, parmi les rayons de lumière émis, sont influencés par l'objet (200) au cours de leur trajet en direction d'un mécanisme de réception (120) ;
- réceptionner les rayons de lumière influencés par l'objet et/ou ceux non influencés par l'objet, à l'aide d'un champ de détection du mécanisme de réception (120) ; dans lequel la définition du champ de détection est connue dans au moins une direction spatiale transversale par rapport à la direction des rayons de lumière ; et
- générer une reproduction (122) du champ de détection comprenant les positions des capteurs (130) du champ de détection, qui sont attribuées aux rayons de lumière qui ne sont pas influencés par l'objet, et comprenant les positions des capteurs (130) du champ de détection qui sont attribuées aux rayons de lumière émis, mais influencés par l'objet qui a été introduit; dans lequel, sur base de la définition connue du champ de détection, on connaît également les distances (dᵢ, dⱼ) entre les positions individuelles des capteurs (130) ;
**caractérisé**
**en ce que**, en ce qui concerne l'objet (200) il s'agit d'un guidage latéral sur une voie de transport pour une brame dans une installation de coulée ou de laminage ;
**en ce que** la source de lumière (100) est montée d'une manière telle que les rayons de lumière (131) s'étendent perpendiculairement à la direction de déplacement du guidage latéral (200) ;
et **en ce que** la reproduction fait l'objet d'une évaluation en ce qui concerne les profondeurs de pénétration (s) du guidage latéral (200) dans le domaine spatial fixé par les rayons de lumière.

2. Procédé selon la revendication 1, **caractérisé en ce que** les distances (dᵢ, dⱼ) entre les capteurs respectifs sont égales ou sont inégales.

3. Procédé selon l'une quelconque des revendications précédentes, **caractérisé en ce que** la reproduction (122) est affichée sur un mécanisme d'affichage (160) pour une personne préposée au fonctionnement de ce dernier.

4. Procédé selon l'une quelconque des revendications précédentes, **caractérisé en ce que** l'évaluation de la reproduction (122) pour la détermination de la profondeur de pénétration réelle (s) de l'objet (200) dans l'étendue spatiale fixée par le faisceau des rayons de lumière a lieu au moins de manière approximative par l'intermédiaire d'une addition des distances connues de toutes les positions des capteurs (130) du champ de détection, qui sont attribuées aux rayons de lumière émis, mais qui sont influencés par l'objet (200) qui a été introduit, dans la direction de déplacement de l'objet (200) dans la reproduction.

5. Procédé selon la revendication 4, **caractérisé en ce que** la profondeur de pénétration réelle (s) qui a été déterminée est comparée à une profondeur de pénétration de consigne qui a été prédéfinie ; et **en ce que** - lorsque la profondeur de pénétration réelle s'écarte de la profondeur de pénétration de consigne - a lieu une correction, de préférence automatique, de la position finale de l'objet jusqu'à ce que la position réelle coïncide avec la position de consigne, et de préférence on génère également un message d'erreur et on affiche ce dernier sur le mécanisme d'affichage (160).

6. Procédé selon la revendication 4 ou 5, **caractérisé en ce que** les profondeurs de pénétration réelles pour des parties différentes de l'objet sont déterminées de manière individuelle par l'intermédiaire d'une évaluation de la reproduction et sont comparées à des profondeurs de pénétration de consigne individuelles qui leur sont attribuées, pour les différentes parties de l'objet ; et - lorsque, pour des parties individuelles de l'objet la profondeur de pénétration réelle individuelle correspond à la profondeur de pénétration individuelle de consigne et ne correspond pas pour d'autres parties de l'objet - on tire des conclusions dans le sens d'une usure partielle des autres parties de l'objet ; dans lequel l'épaisseur de l'usure est représentée par l'ampleur de la différence entre la profondeur de pénétration individuelle réelle et la profondeur de pénétration individuelle de consigne des autres parties de l'objet.

7. Procédé selon la revendication 5 ou 6, **caractérisé en ce qu'**on détermine la différence entre la profondeur de pénétration de consigne et la profondeur de pénétration réelle par rapport à l'ensemble de l'objet ou l'épaisseur de l'usure des autres parties de l'objet et on les met en mémoire à titre de valeur de décalage qui doit être prise en compte lors des positionnements futurs de l'objet (200).

8. Procédé selon l'une quelconque des revendications précédentes, **caractérisé par** une réorientation des rayons de lumière émis par la source de lumière, pour autant qu'ils ne soient pas interrompus par le guidage latéral, contre le mécanisme de réception.

9. Procédé selon la revendication 1, **caractérisé en ce que** le procédé, pour la préparation de la mesure de l'objet (200), présente les étapes suivantes dans lesquelles :
- on incorpore ladite au moins une source de lumière (110) et le mécanisme de réception (120) comprenant le champ de détection de même que, le cas échéant un mécanisme faisant office de réflecteur (180), dans le chemin de transport de la brame ;
- on oriente ladite au moins une source de lumière et le champ de détection de même que le cas échéant également le mécanisme faisant office de réflecteur d'une manière telle que le champ de détection puisse recevoir les rayons de lumière de la source de lumière ; et
- on dispose le champ de détection dans une position relative fixe par rapport à la position de départ de l'objet mobile d'une manière telle que l'objet se retrouve, au moins lorsqu'il atteint sa position finale, au moins en partie au sein de l'étendue spatiale fixée par les rayons de lumière.

10. Procédé selon l'une quelconque des revendications 4 à 9, **caractérisé en ce que** - lorsque la profondeur de pénétration réelle du guidage latéral (200) dans la voie de transport qui a été déterminée est inférieure à la profondeur de pénétration de consigne - un avertissement est envoyé qui contient de préférence une indication concernant une détérioration au moins partielle du guidage latéral et - lorsqu'on atteint une limite définie - de préférence une recommandation en ce qui concerne un échange visant le guidage latéral détérioré, après avoir procédé au préalable à un étalonnage.

11. Système de mesure (100) destiné à la mise en œuvre du procédé selon l'une quelconque des revendications précédentes, présentant :
au moins une source de lumière (110) destinée à l'émission de rayons de lumière parallèles (131) qui fixent une étendue spatiale ;
un mécanisme de réception (120) comprenant un champ de détection destiné à la réception d'au moins une partie des rayons de lumière émis; dans lequel la résolution du champ de détection est connue dans au moins une direction spatiale transversale par rapport à la direction des rayons de lumière ; et
un mécanisme d'évaluation (140) destiné à l'évaluation des rayons de lumière reçus par le mécanisme de réception (120) :
dans lequel le mécanisme de réception (120) est conçu pour générer une reproduction (122) du champ de détection comprenant les positions des capteurs du champ de détection qui sont attribuées aux rayons de lumière (131) qui ne sont pas influencés par l'objet et comprenant les positions des capteurs du champ de détection qui sont attribuées aux rayons de lumière émis, mais qui sont influencés par l'objet (200) qui a été introduit ; dans lequel, sur base de la résolution connue du champ de détection, on connaît également les distances (dᵢ, dⱼ) qui séparent les positions individuelles ;
**caractérisé en ce que**, en ce qui concerne l'objet (200) il s'agit d'un guidage latéral le long d'une voie de transport pour une brame dans une installation de coulée ou de laminage ;
**en ce que** la source de lumière (110) est montée d'une manière telle que les rayons de lumière (131) s'étendent perpendiculairement à la direction de déplacement du guidage latéral (200) ;
**en ce que** le guidage latéral pénètre, au cours de son mouvement, dans l'étendue spatiale fixée par les rayons de lumière (131) ; et
**en ce que** le mécanisme d'évaluation (140) est réalisé dans le but d'évaluer la reproduction (122) en ce qui concerne la profondeur de pénétration (s) du guidage latéral dans l'étendue spatiale fixée par le faisceau des rayons de lumière.

12. Système de mesure (100) selon la revendication 11, **caractérisé en ce que** ladite au moins une source de lumière (110) est réalisée de préférence sous la forme d'une source de lumière laser destinée à émettre un faisceau de lumière de rayons de lumière parallèles possédant une section transversale unidimensionnelle ou bidimensionnelle.

13. Système de mesure (100) selon la revendication 11 ou 12, **caractérisé en ce que** le système de mesure présente une source d'énergie électrique (150) qui lui est propre, par exemple une batterie ou un accumulateur.

14. Système de mesure (100) selon l'une quelconque des revendications 11 à 13, **caractérisé par** un mécanisme d'affichage (160) qui est mis en liaison avec le mécanisme de réception (120) et/ou avec le mécanisme d'évaluation (140) par câble ou par radio à des fins de transmission de données, en particulier pour l'affichage de la reproduction (122).

15. Système de mesure (100) selon l'une quelconque des revendications 11 à 14, **caractérisé par** un mécanisme (180) faisant office de réflecteur qui est disposé dans la direction en largeur des rayons de lumière (131) derrière le guidage latéral pour la déviation des rayons de lumière (131) qui ne sont pas influencés par le guidage latéral, sur le champ de détection du mécanisme de réception (120).

16. Système de mesure (100) selon l'une quelconque des revendications 11 à 15, **caractérisé en ce que** la source de lumière (110), le mécanisme de réception (120) et, le cas échéant, le mécanisme faisant office de réflecteur, peuvent être positionnés librement, en particulier peuvent faire l'objet d'un ajustement précis de préférence à l'aide d'éléments de positionnement, dans le but d'obtenir une orientation réciproque optimale.

17. Installation de coulée ou de laminage pour la fabrication ou pour le traitement d'une barre de coulée, présentant une voie de transport pour la barre de coulée comprenant des guidages latéraux au bord de la voie de transport pour le guidage de la barre de coulée ; dans laquelle les guidages latéraux peuvent pénétrer, avec l'aide d'actionneurs (210) dans la voie de transport, perpendiculairement à la ligne de ce dernier, et en ressortir ;
**caractérisé par le fait que** l'installation de coulée ou laminage présente le système de mesure selon l'une quelconque des revendications 11 à 16 ;
dans lequel, en ce qui concerne l'objet, il s'agit des guidages latéraux ; et
dans lequel la source de lumière (110) et le mécanisme de réception (120), de même que le cas échéant le mécanisme faisant office de réflecteur, sont orientés d'une manière telle que les rayons de lumière émis (131) s'étendent perpendiculairement à la direction de déplacement des guidages latéraux (200) et en ce que les guidages latéraux sont en mesure de se déplacer pour pénétrer en direction transversale dans l'étendue spatiale fixée par les rayons de lumière.
